# EUROPEAN PATENT APPLICATION

(11) **EP 3 399 814 A1**
(43) Date of publication of application: **07.11.2018**
(21) Application number: 16881138.8
(22) Date of filing: 26.12.2016
(51) Int. Cl.: H04W 72/04

(54) **RESOURCE CONFIGURATION METHOD FOR DEMODULATING REFERENCE SIGNAL, BASE STATION, AND USER EQUIPMENT**

(30) Priority: 28.12.2015 CN 201510999192
(71) Applicant: Sharp Kabushiki Kaisha, Sakai City, Osaka 590-8522 (JP)
(72) Inventor: LIU, Renmao, Shanghai 201203 (CN); XIAO, Fangying, Shanghai 201203 (CN)
(74) Representative: Müller Hoffmann & Partner
(86) International application number: PCT/CN2016/112063
(87) International publication number: WO 2017/114349

(57) **Abstract**

Embodiments of the present disclosure provide a configuration method for reference signal resource elements for NB-IoT physical downlink channel demodulation, and a corresponding base station and user equipment for executing the method. The base station according to the embodiments of the present disclosure comprises: a configuration unit, used to configure group numbers of reference signal resource element groups for narrowband Internet of Things physical downlink channel demodulation, wherein at least two reference signal resource element groups for demodulating narrowband Internet of Things physical downlink channels are predefined; and a transmitting unit, configured to transmit indication information indicating the configured group numbers of the reference signal resource element groups for demodulating the narrowband Internet of Things physical downlink channels.

## Description

### Technical Field

The present disclosure relates to the field of wireless communication technology. More specifically, the present disclosure relates to a configuration method for reference signal resource elements for physical channel demodulation, a base station, and a user equipment.

### Background Art

With the rapid growth of mobile communication and great progress of technology, the world will move towards a fully interconnected network society where anyone or any device can acquire information and share data anytime and anywhere. It is estimated that there will be 50 billion interconnected equipments by 2020, of which only about 10 billion may be mobile phones and tablet computers. The rest are not machines communicating with human beings but machines communicating with one another. Therefore, how to design a system to better support the Internet of Everything is a subject needing further and intensive study.

In the standard of Long Term Evolution (LTE) of the Third Generation Partnership Project (3GPP), machine-to-machine communication is called machine type communication (MTC). MTC is a data communication service that does not require human participation. Deployment of large-scale MTC user equipments can be used in such fields as security, tracking, billing, measurement and consumer electronics, and specifically relates applications, including video monitoring, supply chain tracking, intelligent meter reading, and remote monitoring. MTC requires lower power consumption and supports lower data transmission rate and lower mobility. The current LTE system is mainly for man-to-man communication services. The key to achieving the competitive scale advantages and application prospects of MTC services is that the LTE network supports low-cost MTC equipments.

In addition, some MTC user equipments need to be installed in the basement of a residential building or at a position within the protection of an insulating foil, a metal window or a thick wall of a traditional building; as compared with the conventional equipment terminals (such as mobile phones and tablet computers) in LTE networks, the air interfaces of MTC user equipment will obviously suffer from more serious penetration losses. 3GPP decides to study the project design and performance evaluation of MTC equipments with enhanced additional 20 dB coverage. It should be noted that MTC equipments located at poor network coverage areas have the following characteristics: extremely low data transmission rates, low latency requirements, and limited mobility. In view of the above characteristics of MTC, the LTE network can further optimize some signals and/or channels to better support MTC services.

Therefore, at the 3GPP RAN # 64 general conference held in June 2014, a new Rel-13-oriented work item of MTC with low complexity and coverage enhancement was proposed (see Non-Patent Document: RP-140990 New Work Item on Even Lower Complexity and Enhanced Coverage LTE UE for MTC, Ericsson, NSN). In the description of this work item, the LTE Rel-13 system needs to support MTC user equipment having uplink/downlink 1.4 MHz RF bandwidth to operate at any system bandwidth (e.g., 1.4 MHz, 3 MHz, 5 MHz, 10 MHz, 15 MHz, 20 MHz, and the like). The standardization of the work item would be completed at the end of 2015.

In addition, in order to better implement the Internet of Everything, another new work item was proposed at the 3GPP RAN # 69 general meeting held in September 2015 (see Non-Patent Document: RP-151621 New Work Item: NarrowBand IoT (NB -IoT)), which we refer to as Narrowband Internet of Thing (NB-IoT). In the description of this item, an NB-IoT user equipment (UE) will support uplink/downlink 180 KHz RF bandwidth.

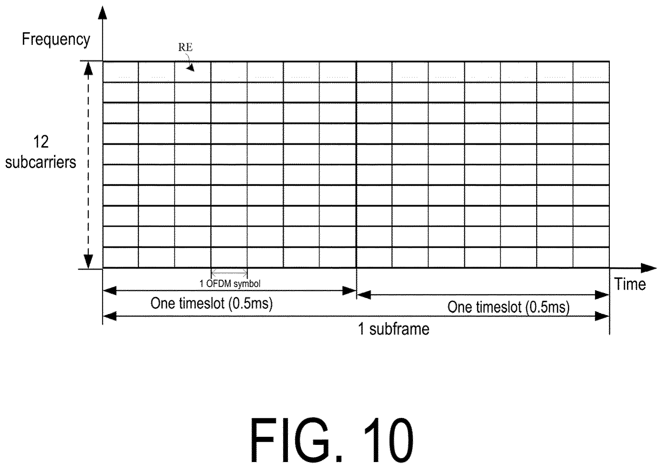

The LTE downlink transmission is based on orthogonal frequency division multiplexing (OFDM). In the LTE system, one radio frame is divided into 10 subframes (#0 to #9). Each subframe may include, for example, 2 timeslots of equal size having a length of 0.5 ms in the time domain, and may include, for example, 12 subcarriers in the frequency domain. Each timeslot includes 7 orthogonal frequency division multiplexing (OFDM) symbols. The OFDM symbols in time and the subcarriers in frequency may be used together for defining resource elements (REs), like time-frequency grids shown in FIG. 10. Each RE corresponds to one subcarrier during an interval of one OFDM symbol. A physical resource block (PRB for short) is also defined in the LTE, where each PRB is composed of 12 consecutive subcarriers during one timeslot. Then, one subframe includes a pair of physical resource blocks, which is also called a physical resource block pair.

In the existing LTE system, a minimum granularity for resource allocation of the UE is one physical resource block or physical resource block pair. That is to say, in the same subframe, multiplexing between multiple physical downlink shared channels (PDSCHs), or multiplexing between a PDSCH and an enhanced physical downlink control channel (EPDCCH) is based on a PRB (or a PRB pair). However, the NB-IoT UE supports uplink/downlink 180 kHz RF bandwidth only, i.e., RF bandwidth having the size of one PRB (or PRB pair). Therefore, the PRB (or PRB pair)-based multiplexing mechanism is not applicable to the NB-IoT. A new downlink channel design applicable to the NB-IoT therefore is needed. Accordingly, a new configuration mechanism for demodulation reference signal (DMRS) resource elements (REs) applicable to the NB-IoT is needed.

### SUMMARY

Embodiments of the present disclosure provide a configuration method for reference signal resource elements solving NB-IoT physical downlink channel demodulation, and a corresponding base station and user equipment for executing the method.

According to a first aspect of the present disclosure, a base station is provided, comprising: a configuration unit, used to configure group numbers of reference signal resource element groups for narrowband Internet of Things physical downlink channel demodulation, wherein at least two reference signal resource element groups for demodulating narrowband Internet of Things physical downlink channels are predefined; and a transmitting unit, configured to transmit indication information indicating the configured group numbers of the reference signal resource element groups for demodulating the narrowband Internet of Things physical downlink channels.

According to a second aspect of the present disclosure, a method executed in a base station is provided, comprising: configuring group numbers of reference signal resource element groups for narrowband Internet of Things physical downlink channel demodulation, wherein at least two reference signal resource element groups for demodulating narrowband Internet of Things physical downlink channels are predefined; and transmitting indication information indicating the configured group numbers of the reference signal resource element groups for demodulating the narrowband Internet of Things physical downlink channels.

According to a third aspect of the present disclosure, a user equipment is provided, comprising: a receiving unit, configured to receive physical downlink signaling; and an extracting unit, configured to extract, from the received physical downlink signaling, indication information indicating configured group numbers of reference signal resource element groups for demodulating narrowband Internet of Things physical downlink channels, wherein at least two reference signal resource element groups for demodulating the narrowband Internet of Things physical downlink channels are predefined.

According to a fourth aspect of the present disclosure, a method executed in a user equipment is provided, comprising:
receiving physical downlink signaling; and extracting, from the received physical downlink signaling, indication information indicating configured group numbers of reference signal resource element groups for demodulating narrowband Internet of Things physical downlink channels, wherein at least two reference signal resource element groups for demodulating the narrowband Internet of Things physical downlink channels are predefined.

In some embodiments of the present disclosure, the indication information indicating the configured group numbers of reference signal resource element groups for demodulating the narrowband Internet of Things physical downlink channels is carried in one of the following signaling: downlink control information, media access control layer signaling, radio resource control signaling, or a system information block.

In some embodiments of the present disclosure, the predefined reference signal resource element groups for demodulating the narrowband Internet of Things physical downlink channels comprise a first reference signal resource element group and a second reference signal resource element group, and the first reference signal resource element group is a subset of the second reference signal resource element group.

Alternatively, the first reference signal resource element group is composed of 12 resource elements in one physical resource block pair, and the second reference signal resource element group is composed of 24 resource elements in the physical resource block pair.

Alternatively, the first reference signal resource element group is composed of 12 resource elements located on the 5th, 6th, 12th, and 13th orthogonal frequency division multiplexing "OFDM" symbols on the 1st, 6th, and 11th subcarriers in the physical resource block pair, and the second reference signal resource element group is composed of 24 resource elements located on the 5th, 6th, 12th, and 13th OFDM symbols on the 0th, 1st, 5th, 6th, 10th, and 11th subcarriers in the physical resource block pair, wherein 12 subcarriers corresponding to the physical resource block pair are numbered 0, 1, ..., 11 according to frequency from low to high, and 14 OFDM symbols corresponding to the physical resource block pair are numbered 0, 1, ..., 13 in time sequence.

Alternatively, when the first reference signal resource element group is configured for narrowband Internet of Things physical downlink channel demodulation, resource elements of the second reference signal resource element group are compared with those of the first reference signal resource element group and extra resource elements of the second reference signal resource element group are redefined for narrowband Internet of Things physical downlink channel transmission.

In some other embodiments, the predefined reference signal resource element groups for demodulating the narrowband Internet of Things physical downlink channels comprise a first reference signal resource element group and a second reference signal resource element group, the first reference signal resource element group is used for transmitting cell-specific reference signals, the second reference signal resource element group is used for transmitting user equipment-specific reference signals, and the first reference signal resource element group and the second reference signal resource element group have an empty intersection.

### Brief Description of Drawings

The above and other features of the present disclosure will become more apparent with the following detailed description in conjunction with the accompanying drawings.
FIG. 1 is a block diagram of a base station according to an embodiment of the present disclosure.
FIG. 2 is a block diagram of a user equipment according to an embodiment of the present disclosure.
FIG. 3a and FIG. 3b are schematic diagrams of two groups of predefined demodulation reference signal resource elements (DMRS REs) according to an embodiment of the present disclosure.
FIG. 4 is a schematic diagram of a downlink subframe in an embodiment of multiplexing downlink physical channels based on an EREG and using 24 DMRS REs.
FIG. 5 is a schematic diagram of a downlink subframe in an embodiment of multiplexing downlink physical channels based on FDM and using 24 DMRS REs.
FIG. 6 is a schematic diagram of a downlink subframe in an embodiment of multiplexing physical channels based on TDM and using 24 DMRS REs.
FIG. 7 is a schematic diagram of a downlink subframe in an embodiment of multiplexing physical channels based on an EREG and using 12 DMRS REs.
FIG. 8 is a schematic diagram of a downlink subframe in an embodiment of multiplexing physical channels based on FDM and using 12 DMRS REs.
FIG. 9 is a schematic diagram of a downlink subframe in an embodiment of multiplexing physical channels based on TDM and using 12 DMRS REs.
FIG. 10 is a schematic diagram of an LTE downlink subframe in the prior art.
FIG. 11 is a flowchart of a method executed in a base station according to an embodiment of the present disclosure.
FIG. 12 is a flowchart of a method executed in a user equipment according to an embodiment of the present disclosure.

### Description of Embodiments

The following describes the present disclosure in detail with reference to the accompanying drawings and specific embodiments. It should be noted that the present disclosure is not limited by these specific embodiments. In addition, for simplicity, a detailed description of a known art not directly related to the present disclosure is omitted to prevent confusion in understanding the present disclosure.

Multiple embodiments according to the present disclosure are specifically described below by using an LTE mobile communications system and its subsequent evolved version as an exemplary application environment. However, it is to be noted that the present disclosure is not limited to the following embodiments, but may be applied to other wireless communication systems, such as a future 5G cellular communication system.

The base stations and user equipments mentioned in the following embodiments of the present disclosure all refer to narrowband Internet of Things (NB-IoT) base stations and user equipments. As described before, these NB-IoT user equipments support uplink/downlink 180 KHz RF bandwidth.

As used herein, a narrowband Internet of Things physical downlink shared channel is called NB-PDSCH for short, and a narrowband Internet of Things physical downlink control channel is called NB-PDCCH for short. A narrowband Internet of Things physical downlink channel may be an NB-PDSCH and/or an NB-PDCCH. A reference signal for demodulating the narrowband Internet of Things physical downlink channel is called a DMRS. A resource element for transmitting the DMRS is called a DMRS RE.

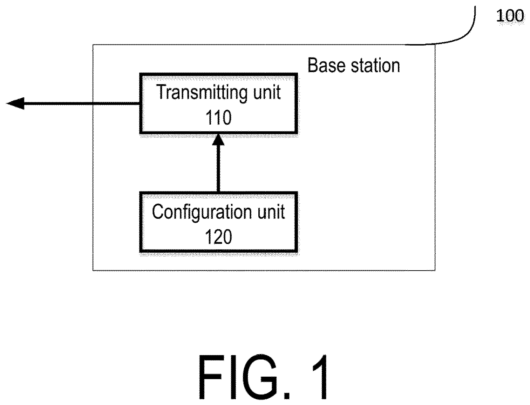

FIG. 1 is a block diagram of a base station 100 according to an embodiment of the present disclosure. As shown in the figure, the base station 100 includes: a transmitting unit 110 and a configuration unit 120. Those skilled in the art should understand that the base station 100 may also include other functional units needed for implementing its functions, such as various processors, memories, radio frequency receiving units, baseband signal extracting units, physical uplink channel reception processing units, and other physical downlink channel transmission processing units. However, for the sake of conciseness, detailed descriptions of these well-known elements are omitted.

The configuration unit 120 configures group numbers of reference signal resource element groups for narrowband Internet of Things physical downlink channel (for example, NB-PDSCH and/or NB-PDCCH) demodulation. At least two groups of reference signal resource elements for demodulating NB-PDSCHs, such as a first group of resource elements and a second group of resource elements, may be predefined in a system.

In some examples, the first group of reference signal resource elements is a subset of the second group of reference signal resource elements. However, in some other examples, the first group of reference signal resource elements and the second group of reference signal resource elements may be two groups of resource elements having an empty intersection.

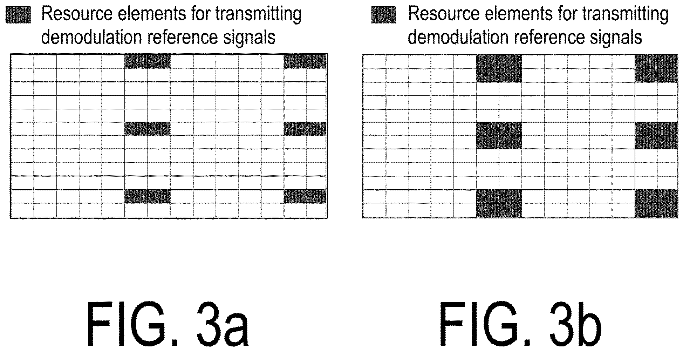

In the situation where the first group of reference signal resource elements is a subset of the second group of reference signal resource elements, the first group of reference signal resource elements, for example, may be composed of 12 resource elements in one physical resource block pair; the second reference signal resource element group is composed of the 12 resource elements constituting the first group of reference signal resource elements and the other 12 resource elements in the same physical resource block pair; a total of 24 resource elements are included in the second reference signal resource element group. Alternatively, in order to be compatible with the existing LTE standard, the first group of demodulation reference signal resource elements may be composed of 12 resource elements for transmitting user equipment-specific reference signals on antenna ports 7 and 8 in the existing LTE (i.e., 12 resource elements located on the 5th, 6th, 12th, and 13th OFDM symbols on the 1st, 6th, and 11th subcarriers in one physical resource block pair); the second group of reference signal resource elements may be composed of 24 resource elements for transmitting user equipment-specific reference signals on antenna ports 7, 8, 9, and 10 in the existing LTE (i.e., 24 resource elements located on the 5th, 6th, 12th, and 13th OFDM symbols on the 0th, 1st, 5th, 6th, 10th, and 11th subcarriers in one physical resource block pair). In this example, 12 subcarriers in one physical resource block pair are numbered 0, 1, ..., 11 according to frequency from low to high; and 14 OFDM symbols are numbered 0, 1, ..., 13 in time sequence. Detailed description of this regard will be provided below with reference to FIG. 3a and FIG. 3b.

It should be understood that in embodiments of the present disclosure, the first and second groups of demodulation reference signal resource elements may occupy resource elements at other positions. For example, the first group of demodulation reference signal resource elements may be composed of 12 resource elements located on the 3rd, 4th, 10th, and 11th OFDM symbols on the 3rd, 8th, and 11th subcarriers in one physical resource block pair; the second group of reference signal resource elements may be composed of 24 resource elements located on the 3rd, 4th, 10th, and 11th OFDM symbols on the 2nd, 3rd, 7th, 8th, 10th, and 11th subcarriers in one physical resource block pair. The present disclosure is not limited in this regard.

It should be further understood that in the present disclosure, the first and second groups of demodulation reference signal resource elements may include more or fewer resource elements; for example, the first group may include 4 resource elements, while the second group may include 8 resource elements. The present disclosure is also not limited in this regard.

In the situation where the first group of reference signal resource elements is a subset of the second group of reference signal resource elements, when the first group of reference signal resource elements is configured for narrowband downlink demodulation, resource elements of the second reference signal resource element group are compared with those of the first reference signal resource element group and extra resource elements of the second reference signal resource element group are redefined for NB-PDSCH transmission. With reference to the example above, when the first group of reference signal resource elements of the 12 resource elements is used for transmitting user equipment-specific reference signals on antenna ports 7 and 8 in the existing LTE, the extra resource elements of the second group of reference signal resource elements when compared with the first group of reference signal resource elements, i.e., 12 resource elements located on the 5th, 6th, 12th, and 13th OFDM symbols on the 0th, 5th, and 10th subcarriers in one physical resource block pair, may be redefined for NB-PDSCH transmission.

In the situation where the first group of reference signal resource elements and the second group of reference signal resource elements are two groups of resource elements having an empty intersection, the first group of reference signal resource elements may be defined for transmitting cell-specific reference signals, and the second reference signal resource element group may be defined for transmitting user equipment-specific reference signals.

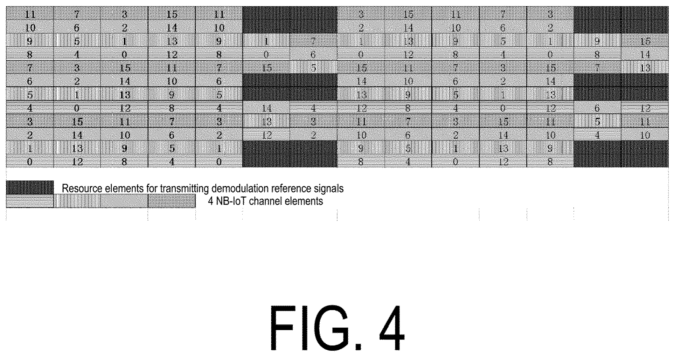

The configuration unit 120 may determine the number of the reference signal resource elements or the reference signal resource element groups for physical downlink channel demodulation according to the multiplexing status of the NB-IoT physical downlink channels (for example, whether an NB-PDCCH and an NB-PDSCH are simultaneously multiplexed in the same subframe; and/or the number of the multiplexed physical downlink channels). Detailed description of this regard will be provided below with reference to FIG. 4 to FIG. 9.

The transmitting unit 110 is configured to transmit indication information indicating configured resource configuration of reference signals for narrowband Internet of Things physical downlink channel (for example, NB-PDSCH and/or NB-PDCCH) demodulation. The indication information may indicate the number of the reference signal resource elements or the group numbers of the reference signal resource element groups for narrowband Internet of Things physical downlink channel demodulation.

The transmitting unit 110 may transmit the indication information by embedding it in physical downlink signaling. For example, the indication information may be embedded in any of the following signaling: downlink control information (DCI), media access control (MAC) layer signaling, radio resource control (RRC) signaling, or a system information block (SIB).

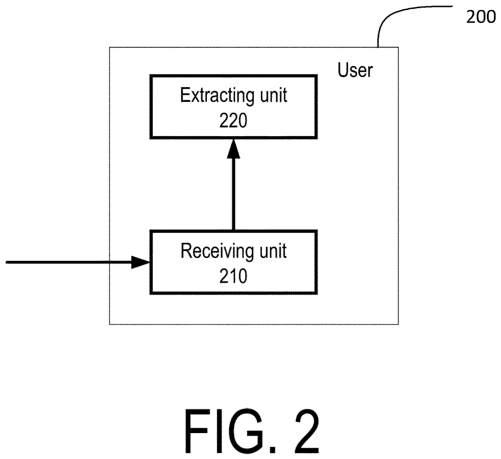

FIG. 2 is a block diagram of a user equipment (UE) 200 according to the present disclosure. As shown in the figure, the UE 200 includes: a receiving unit 210 and an extracting unit 220. Those skilled in the art should understand that the UE 200 also includes other functional units needed for implementing its functions, such as various processors, memories, radio frequency transmitting units, baseband signal extracting units, physical uplink channel transmission processing units, and other physical downlink channel reception processing units. However, for the sake of conciseness, detailed descriptions of these well-known elements are omitted.

The receiving unit 210 receives NB-IoT physical downlink signaling.

The processing unit 220 extracts, from the received NB-IoT physical downlink signaling, indication information indicating configured resource configuration of reference signals for narrowband Internet of Things physical downlink channel (for example, NB-PDSCH and/or NB-PDCCH) demodulation, such as indication information indicating the number of reference signal resource elements or group numbers of reference signal resource element groups for narrowband Internet of Things physical downlink channel demodulation.

For example, the user equipment may extract information about the number of the reference signal resource elements or the group numbers of the reference signal resource element groups or the like for physical downlink channel demodulation through DCI or MAC layer signaling or RRC signaling or a system information block.

FIG. 3a and FIG. 3b are schematic diagrams of two reference signal resource element groups for physical downlink channel demodulation predefined in a system according to a specific embodiment of the present disclosure. FIG. 3a illustrates a layout of a first reference signal resource element group in a subframe, which is composed of 12 reference signal resource elements; FIG. 3b illustrates a layout of a second reference signal resource element group in the subframe, which is composed of 24 reference signal resource elements.

The 12 reference signal resource elements in the first reference signal resource element group correspond to 12 resource elements for transmitting user equipment-specific reference signals on antenna ports 7 and 8 in the existing LTE; the 24 reference signal resource elements in the second reference signal resource element group correspond to 24 resource elements for transmitting user equipment-specific reference signals on antenna ports 7, 8, 9, and 10 in the existing LTE.

As described before, the configuration unit may determine the number of the reference signal resource elements or the reference signal resource element groups for physical downlink channel demodulation according to the multiplexing status of the NB-IoT physical downlink channels. Exemplary description of this regard is provided below with reference to the situation where the two reference signal resource element groups shown in FIG. 3a and FIG. 3b are predefined in the system.

For example, when an NB-PDCCH and an NB-PDSCH are simultaneously multiplexed in the same subframe, 24 reference signal resource elements (or a resource element group composed of 24 resource elements) may be used for demodulation of the NB-IoT NB-PDCCH and NB-PDSCH.

When only NB-PDSCHs are multiplexed in the same subframe and the number of the multiplexed NB-PDSCHs is greater than 4 (or the number of multiplexed NB-IoT UEs is greater than 4), 24 reference signal resource elements (or a resource element group composed of 24 resource elements) may be used for demodulation of the NB-PDSCHs.

When only NB-PDSCHs are multiplexed in the same subframe and the number of the multiplexed NB-PDSCHs (or the number of multiplexed NB-IoT UEs) is less than or equal to 4, 12 reference signal resource elements (or a resource element group composed of 12 resource elements) may be used for demodulation of the NB-PDSCHs.

If an NB-PDCCH and an NB-PDSCH are simultaneously multiplexed in the same subframe, the multiplexing between the NB-PDCCH and the NB-PDSCH may be based on an enhanced resource element group (EREG) or frequency division multiplexing (FDM) or time division multiplexing (TDM).

If only NB-PDSCHs are multiplexed in the same subframe, the multiplexing between multiple NB-PDCCHs may be based on an enhanced resource element group (EREG) or frequency division multiplexing (FDM) or time division multiplexing (TDM).

Exemplary description is provided below with reference to downlink channel designs according to various embodiments of the present disclosure shown from FIG. 4 to FIG. 9.

FIG. 4 is a schematic diagram of a downlink subframe according to an embodiment of the present disclosure, where physical channels are multiplexed based on an EREG and 24 DMRS REs are used.

EREGs are used for defining a mapping between NB-PDCCHs and/or NB-PDSCHs and resource elements. One NB-IoT downlink subframe (or one physical resource block pair) contains 16 EREGs numbered 0 to 15, and each EREG is composed of 9 resource elements. As shown in FIG. 4, in one NB-IoT downlink subframe, all resource elements except resource elements carrying 24 demodulation reference signals are cyclically numbered in ascending order from 0 to 15 according to a sequence of frequency domain first and then time domain; and resource elements having the same number belong to the same EREG group. For example, all resource elements having the number 0 constitute EREG #0; all resource elements having the number 1 constitute EREG #1; and so on.

One NB-PDCCH is composed of one or more enhanced resource element groups (EREGs).

One NB-PDSCH is composed of one or more EREGs.

It should be understood that the definition of the EREG is not limited to the above definition manner; and the EREG may also be any combination of resource elements distributed in two dimensions of time domain and frequency domain in the same subframe. The EREG may even be any combination of resource elements distributed in two dimensions of time domain and frequency domain in multiple subframes. For example, in one NB-IoT downlink subframe, all resource elements except resource elements carrying demodulation reference signals may be cyclically numbered in ascending order from 0 to 15 according to a sequence of time domain first and then frequency domain; and then resource elements having the same number are categorized into the same EREG group. The present disclosure is not limited in this regard.

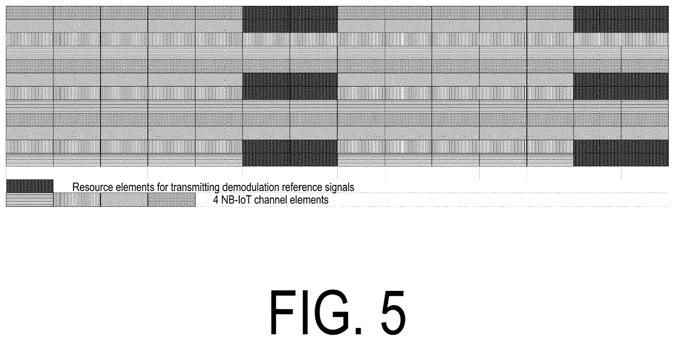

FIG. 5 is a schematic diagram of a downlink subframe according to another embodiment of the present disclosure, where physical channels are multiplexed based on FDM and 24 DMRS REs are used. That is, in one subframe, an NB-PDCCH and/or NB-PDSCH is multiplexed in a unit of one or more subcarriers. When the NB-PDCCH or NB-PDSCH is composed of multiple subcarriers, the multiple subcarriers thereof may be continuously distributed subcarriers, or may be discontinuously distributed subcarriers.

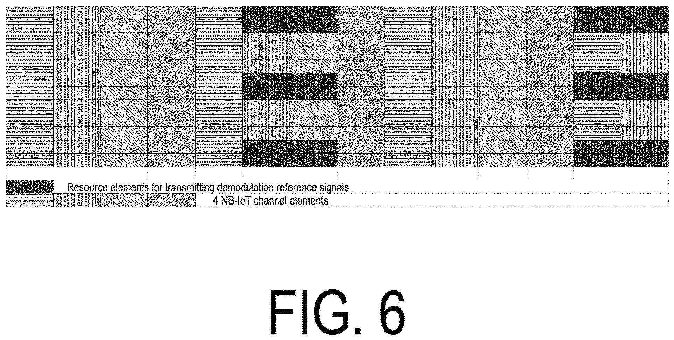

FIG. 6 is a schematic diagram of a downlink subframe according to another embodiment of the present disclosure, where physical channels are multiplexed based on TDM and 24 DMRS REs are used. That is, in one subframe, an NB-PDCCH and/or NB-PDSCH is multiplexed in a unit of one or more orthogonal frequency division multiplexing (OFDM) symbols. When the NB-PDCCH or NB-PDSCH is composed of multiple OFDM symbols, the multiple OFDM symbols thereof may be continuously distributed OFDM symbols, or may be discontinuously distributed OFDM symbols.

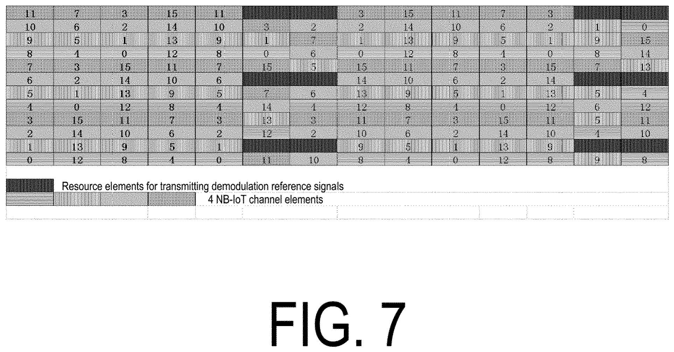

As described before, when the number of reference signal resource elements for NB-PDSCH (and/or NB-PDCCH) demodulation is 12 (or a reference signal resource element group for NB-PDSCH (and/or NB-PDCCH) demodulation is composed of 12 resource elements), extra 12 resource elements compared with the 24 resource elements may be redefined for NB-PDSCH (and/or NB-PDCCH) transmission. Exemplary description is given below with reference to FIG. 7 to FIG. 9.

FIG. 7 is a schematic diagram of a downlink subframe according to another embodiment of the present disclosure, where physical channels are multiplexed based on an EREG and 12 DMRS REs are used.

EREGs are used for defining a mapping between NB-PDSCHs and resource elements. One NB-IoT downlink subframe (or one physical resource block pair) contains 16 EREGs numbered 0 to 15. The EREGs are generated in the following two manners.

Manner 1: as shown in FIG. 7, in one NB-IoT downlink subframe, all resource elements except resource elements carrying 12 demodulation reference signals and resource elements redefined for transmitting NB-PDSCHs (and/or NB-PDCCHs) are cyclically numbered in ascending order from 0 to 15 according to a sequence of frequency domain first and then time domain; and resource elements having the same number belong to the same EREG group. For example, all resource elements having the number 0 constitute EREG #0; all resource elements having the number 1 constitute EREG #1; and so on. Moreover, the additional 12 resource elements may be rearranged into 12 EREGs of the 16 EREGs. There are multiple arrangement manners. One arrangement manner is shown in FIG. 7; and the 12 resource elements are arranged into EREGs #0 to #12 as shown in FIG. 7.

Manner 2: in one NB-IoT downlink subframe, all resource elements except resource elements carrying 12 demodulation reference signals are cyclically numbered in ascending order from 0 to 15 according to a sequence of frequency domain first and then time domain; and resource elements having the same number belong to the same EREG group. For example, all resource elements having the number 0 constitute EREG #0; all resource elements having the number 1 constitute EREG #1; and so on.

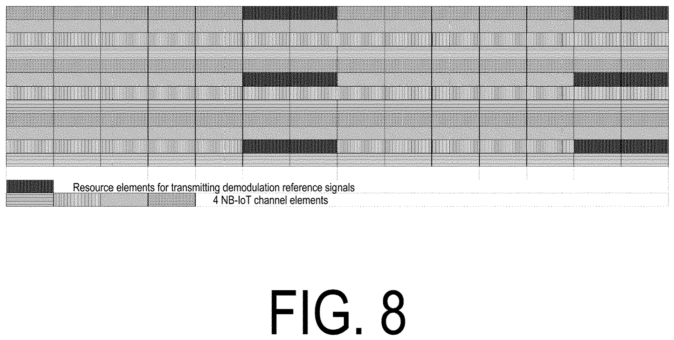

FIG. 8 is a schematic diagram of a downlink subframe according to another embodiment of the present disclosure, where physical channels are multiplexed based on FDM and 12 DMRS REs are used. As can be seen from the figure, the extra 12 reference signal resource elements are respectively categorized into subcarriers where they are located. FIG. 8 illustrates only one redefinition or allocation manner of the extra 12 reference signal resource elements; yet, the illustration does not exclude other redefinition or allocation manners. The present disclosure is not limited in this regard.

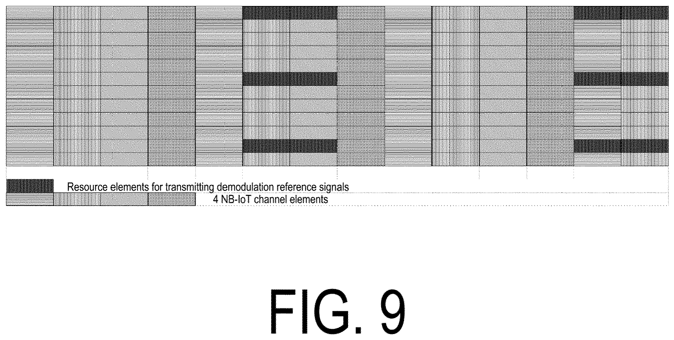

FIG. 9 is a schematic diagram of a downlink subframe according to another embodiment of the present disclosure, where physical channels are multiplexed based on TDM and 12 DMRS REs are used. As can be seen from FIG. 9, the extra 12 reference signal resource elements are respectively categorized into OFDM symbols where they are located. FIG. 9 illustrates only one redefinition or allocation manner of the extra 12 reference signal resource elements; yet, the illustration does not exclude other redefinition or allocation manners. The present disclosure is not limited in this regard.

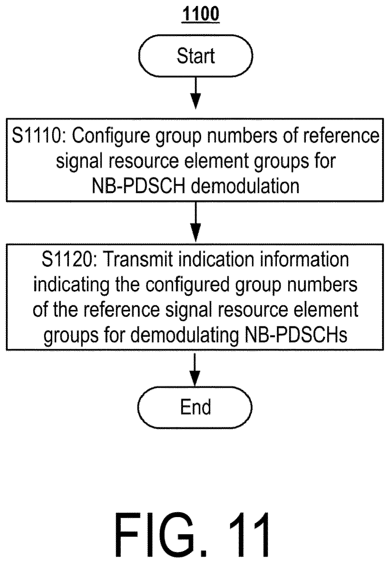

FIG. 11 is a flowchart of a method 1100 executed in a base station according to an embodiment of the present disclosure.

In step S1110, group numbers of reference signal resource element groups for narrowband Internet of Things physical downlink channel (for example, NB-PDSCH and/or NB-PDCCH) demodulation are configured. At least two reference signal resource element groups for demodulating narrowband Internet of Things physical downlink channels are predefined.

In step S1120, indication information indicating the configured group numbers of the reference signal resource element groups for demodulating the narrowband Internet of Things physical downlink channels is transmitted. The indication information may be transmitted through being embedded in any downlink signaling: downlink control information (DCI), media access control (MAC) layer signaling, radio resource control (RRC) signaling, or a system information block (SIB).

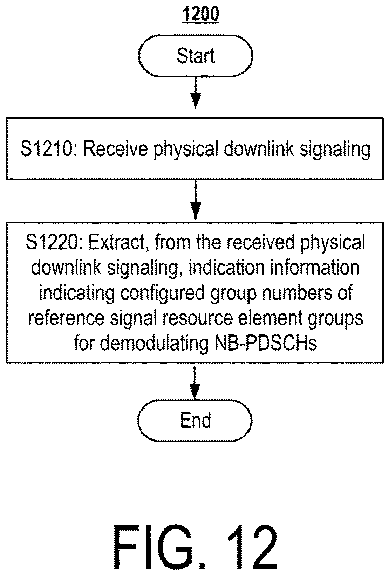

FIG. 12 is a flowchart of a method 1200 executed in a user equipment according to an embodiment of the present disclosure.

In step S1210, physical downlink signaling is received.

In step S1220, indication information indicating configured group numbers of reference signal resource element groups for demodulating narrowband Internet of Things physical downlink channels is extracted from the received physical downlink signaling.

At least two reference signal resource element groups for demodulating the narrowband Internet of Things physical downlink channels are predefined in a system.

The downlink signaling may be any of the following signaling: downlink control information (DCI), media access control (MAC) layer signaling, radio resource control (RRC) signaling, or a system information block (SIB).

The methods 1100 and 1200 according to the present disclosure may be respectively executed by the base station and the user equipment according to the embodiments of the present disclosure. The operations of the base station and the user equipment according to the embodiments of the present disclosure have been described in detail above, and the details of the methods according to the embodiments of the present disclosure will not be described herein again.

The methods and related devices according to the present disclosure have been described above in conjunction with preferred embodiments. It should be understood by those skilled in the art that the methods shown above are only exemplary. The method according to the present disclosure is not limited to steps or sequences shown above. The network node and the user equipment illustrated above may comprise more modules; for example, they may further comprise modules which can be developed or developed in the future to be applied to modules of a base station or a UE. Various identifiers shown above are only exemplary, but not for limiting the present disclosure; and the present disclosure is not limited to specific cells described as examples of these identifiers. A person skilled in the art can make various alterations and modifications according to the teachings of the illustrated embodiments.

It should be understood that the above embodiments of the present disclosure may be implemented through software, hardware, or a combination of software and hardware. For example, various components of the base station and user equipment in the above embodiments can be realized through multiple devices, and these devices include, but are not limited to: an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In this application, the "base station" refers to a mobile communication data and control switching center with large transmission power and wide coverage area, including resource allocation scheduling, data receiving, and transmitting functions. The term "user equipment" refers to a user mobile terminal, such as a terminal device that can perform wireless communication with a base station or a micro base station, including a mobile phone, a notebook, or the like.

In addition, the embodiments disclosed herein may be implemented on a computer program product. More specifically, the computer program product is a product provided with a computer-readable medium having computer program logic encoded thereon. When executed on a computing device, the computer program logic provides related operations to implement the above-described technical solutions of the present disclosure. When being executed on at least one processor of a computing system, the computer program logic enables the processor to perform the operations (methods) described in the embodiments of the present disclosure. Such an arrangement of the present disclosure is typically provided as software, code, and/or other data structures that are configured or encoded on a computer-readable medium, such as an optical medium (for example, a CD-ROM), a floppy disk, or a hard disk, or other media such as firmware or microcode on one or more ROM or RAM or PROM chips, or downloadable software images, shared database and so on in one or more modules. Software or firmware or such configuration may be installed on a computing equipment such that one or more processors in the computing equipment perform the technical solutions described in the embodiments of the present disclosure.

In addition, each functional module or each feature of the base station equipment and the terminal equipment used in each of the above embodiments may be implemented or executed by a circuit, which is usually one or more integrated circuits. Circuits designed to perform various functions described in this description may include general purpose processors, digital signal processors (DSPs), application specific integrated circuits (ASICs) or general purpose integrated circuits, field programmable gate arrays (FPGAs) or other programmable logic devices, discrete gates or transistor logic, or discrete hardware components, or any combination of the above. The general-purpose processor may be a microprocessor, or the processor may be an existing processor, a controller, a microcontroller, or a state machine. The above-mentioned general-purpose processor or each circuit may be configured with a digital circuit or may be configured with a logic circuit. In addition, when an advanced technology that can replace current integrated circuits emerges because of advances in semiconductor technology, the present disclosure may also use integrated circuits obtained using this advanced technology.

Although the present disclosure has been shown in connection with the preferred embodiments disclosed herein, it will be understood by those skilled in the art that various modifications, substitutions, and alterations may be made therein without departing from the spirit and scope of the present disclosure. Accordingly, the present disclosure should not be defined by the above-described embodiments, but should be defined by the appended claims and their equivalents.

## Claims

1. A base station, comprising: a configuration unit, used to configure group numbers of reference signal resource element groups for narrowband Internet of Things physical downlink channel demodulation, wherein at least two reference signal resource element groups for demodulating narrowband Internet of Things physical downlink channels are predefined; and a transmitting unit, configured to transmit indication information indicating the configured group numbers of the reference signal resource element groups for demodulating the narrowband Internet of Things physical downlink channels.

2. The base station according to claim 1, wherein the transmitting unit transmits the indication information by including the indication information in one of the following physical downlink signaling: downlink control information, media access control layer signaling, radio resource control signaling, or a system information block.

3. The base station according to claim 1, wherein the predefined reference signal resource element groups for demodulating the narrowband Internet of Things physical downlink channels comprise a first reference signal resource element group and a second reference signal resource element group, and the first reference signal resource element group is a subset of the second reference signal resource element group.

4. The base station according to claim 3, wherein the first reference signal resource element group is composed of 12 resource elements in one physical resource block pair, and the second reference signal resource element group is composed of 24 resource elements in the physical resource block pair.

5. The base station according to claim 4, wherein the first reference signal resource element group is composed of 12 resource elements located on the 5th, 6th, 12th, and 13th orthogonal frequency division multiplexing "OFDM" symbols on the 1st, 6th, and 11th subcarriers in the physical resource block pair, and the second reference signal resource element group is composed of 24 resource elements located on the 5th, 6th, 12th, and 13th OFDM symbols on the 0th, 1st, 5th, 6th, 10th, and 11th subcarriers in the physical resource block pair, wherein 12 subcarriers corresponding to the physical resource block pair are numbered 0, 1, ..., 11 according to frequency from low to high, and 14 OFDM symbols corresponding to the physical resource block pair are numbered 0, 1, ..., 13 in time sequence.

6. The base station according to any one of claims 3 to 5, wherein when the first reference signal resource element group is configured for narrowband Internet of Things physical downlink channel demodulation, resource elements of the second reference signal resource element group are compared with those of the first reference signal resource element group and extra resource elements of the second reference signal resource element group are redefined for narrowband Internet of Things physical downlink channel transmission.

7. The base station according to claim 1, wherein the predefined reference signal resource element groups for demodulating the narrowband Internet of Things physical downlink channels comprise a first reference signal resource element group and a second reference signal resource element group, the first reference signal resource element group is used for transmitting cell-specific reference signals, the second reference signal resource element group is used for transmitting user equipment-specific reference signals, and the first reference signal resource element group and the second reference signal resource element group have an empty intersection.

8. A method executed in a base station, comprising: configuring group numbers of reference signal resource element groups for narrowband Internet of Things physical downlink channel demodulation, wherein at least two reference signal resource element groups for demodulating narrowband Internet of Things physical downlink channels are predefined; and transmitting indication information indicating the configured group numbers of the reference signal resource element groups for demodulating the narrowband Internet of Things physical downlink channels.

9. The method according to claim 8, wherein the transmitting unit transmits the indication information by including the indication information in one of the following physical downlink signaling: downlink control information, media access control layer signaling, radio resource control signaling, or a system information block.

10. The method according to claim 8, wherein the predefined reference signal resource element groups for demodulating the narrowband Internet of Things physical downlink channels comprise a first reference signal resource element group and a second reference signal resource element group, and the first reference signal resource element group is a subset of the second reference signal resource element group.

11. The method according to claim 10, wherein the first reference signal resource element group is composed of 12 resource elements in one physical resource block pair, and the second reference signal resource element group is composed of 24 resource elements in the physical resource block pair.

12. The method according to claim 11, wherein the first reference signal resource element group is composed of 12 resource elements located on the 5th, 6th, 12th, and 13th orthogonal frequency division multiplexing "OFDM" symbols on the 1st, 6th, and 11th subcarriers in the physical resource block pair, and the second reference signal resource element group is composed of 24 resource elements located on the 5th, 6th, 12th, and 13th OFDM symbols on the 0th, 1st, 5th, 6th, 10th, and 11th subcarriers in the physical resource block pair, wherein 12 subcarriers corresponding to the physical resource block pair are numbered 0, 1, ..., 11 according to frequency from low to high, and 14 OFDM symbols corresponding to the physical resource block pair are numbered 0, 1, ..., 13 in time sequence.

13. The method according to any one of claims 10 to 12, wherein when the first reference signal resource element group is configured for narrowband Internet of Things physical downlink channel demodulation, resource elements of the second reference signal resource element group are compared with those of the first reference signal resource element group and extra resource elements of the second reference signal resource element group are redefined for narrowband Internet of Things physical downlink channel transmission.

14. The method according to claim 8, wherein the predefined reference signal resource element groups for demodulating the narrowband Internet of Things physical downlink channels comprise a first reference signal resource element group and a second reference signal resource element group, the first reference signal resource element group is used for transmitting cell-specific reference signals, the second reference signal resource element group is used for transmitting user equipment-specific reference signals, and the first reference signal resource element group and the second reference signal resource element group have an empty intersection.

15. A user equipment, comprising: a receiving unit, configured to receive physical downlink signaling; and an extracting unit, configured to extract, from the received physical downlink signaling, indication information indicating configured group numbers of reference signal resource element groups for demodulating narrowband Internet of Things physical downlink channels, wherein at least two reference signal resource element groups for demodulating the narrowband Internet of Things physical downlink channels are predefined.

16. The user equipment according to claim 15, wherein the physical downlink signaling is one of the following: downlink control information, media access control layer signaling, radio resource control signaling, or a system information block.

17. The user equipment according to claim 15, wherein the predefined reference signal resource element groups for demodulating the narrowband Internet of Things physical downlink channels comprise a first reference signal resource element group and a second reference signal resource element group, and the first reference signal resource element group is a subset of the second reference signal resource element group.

18. The user equipment according to claim 17, wherein the first reference signal resource element group is composed of 12 resource elements in one physical resource block pair, and the second reference signal resource element group is composed of 24 resource elements in the physical resource block pair.

19. The user equipment according to claim 18, wherein the first reference signal resource element group is composed of 12 resource elements located on the 5th, 6th, 12th, and 13th orthogonal frequency division multiplexing "OFDM" symbols on the 1st, 6th, and 11th subcarriers in the physical resource block pair, and the second reference signal resource element group is composed of 24 resource elements located on the 5th, 6th, 12th, and 13th OFDM symbols on the 0th, 1st, 5th, 6th, 10th, and 11th subcarriers in the physical resource block pair, wherein 12 subcarriers corresponding to the physical resource block pair are numbered 0, 1, ..., 11 according to frequency from low to high, and 14 OFDM symbols corresponding to the physical resource block pair are numbered 0, 1, ..., 13 in time sequence.

20. The user equipment according to any one of claims 17 to 19, wherein when the first reference signal resource element group is configured for narrowband Internet of Things physical downlink channel demodulation, resource elements of the second reference signal resource element group are compared with those of the first reference signal resource element group and extra resource elements of the second reference signal resource element group are redefined for narrowband Internet of Things physical downlink channel transmission.

21. The user equipment according to claim 15, wherein the predefined reference signal resource element groups for demodulating the narrowband Internet of Things physical downlink channels comprise a first reference signal resource element group and a second reference signal resource element group, the first reference signal resource element group is used for transmitting cell-specific reference signals, the second reference signal resource element group is used for transmitting user equipment-specific reference signals, and the first reference signal resource element group and the second reference signal resource element group have an empty intersection.

22. A method executed in a user equipment, comprising: receiving physical downlink signaling; and extracting, from the received physical downlink signaling, indication information indicating configured group numbers of reference signal resource element groups for demodulating narrowband Internet of Things physical downlink channels, wherein at least two reference signal resource element groups for demodulating the narrowband Internet of Things physical downlink channels are predefined.

23. The method according to claim 22, wherein the physical downlink signaling is one of the following: downlink control information, media access control layer signaling, radio resource control signaling, or a system information block.

24. The method according to claim 22, wherein the predefined reference signal resource element groups for demodulating the narrowband Internet of Things physical downlink channels comprise a first reference signal resource element group and a second reference signal resource element group, and the first reference signal resource element group is a subset of the second reference signal resource element group.

25. The method according to claim 24, wherein the first reference signal resource element group is composed of 12 resource elements in one physical resource block pair, and the second reference signal resource element group is composed of 24 resource elements in the physical resource block pair.

26. The method according to claim 25, wherein the first reference signal resource element group is composed of 12 resource elements located on the 5th, 6th, 12th, and 13th orthogonal frequency division multiplexing "OFDM" symbols on the 1st, 6th, and 11th subcarriers in the physical resource block pair, and the second reference signal resource element group is composed of 24 resource elements located on the 5th, 6th, 12th, and 13th OFDM symbols on the 0th, 1st, 5th, 6th, 10th, and 11th subcarriers in the physical resource block pair, wherein 12 subcarriers corresponding to the physical resource block pair are numbered 0, 1, ..., 11 according to frequency from low to high, and 14 OFDM symbols corresponding to the physical resource block pair are numbered 0, 1, ..., 13 in time sequence.

27. The method according to any one of claims 24 to 26, wherein when the first reference signal resource element group is configured for narrowband Internet of Things physical downlink channel demodulation, resource elements of the second reference signal resource element group are compared with those of the first reference signal resource element group and extra resource elements of the second reference signal resource element group are redefined for narrowband Internet of Things physical downlink channel transmission.

28. The method according to claim 22, wherein the predefined reference signal resource element groups for demodulating the narrowband Internet of Things physical downlink channels comprise a first reference signal resource element group and a second reference signal resource element group, the first reference signal resource element group is used for transmitting cell-specific reference signals, the second reference signal resource element group is used for transmitting user equipment-specific reference signals, and the first reference signal resource element group and the second reference signal resource element group have an empty intersection.
